# FASCICULE DE BREVET EUROPEEN

(11) **EP 0 993 550 B1**
(45) Date de publication et mention de la délivrance du brevet: **05.03.2003**
(21) Numéro de dépôt: 98935071.5
(22) Date de dépôt: 01.07.1998
(51) Int. Cl.: F02M 37/10

(54) **DISPOSITIF DE PUISAGE DE CARBURANT POUR RESERVOIR DE VEHICULE AUTOMOBILE**
KRAFTSTOFFZUFUHRVORRICHTUNG FÜR FAHRZEUGKRAFTSTOFFBEHÄLTER
FUEL DRAWING DEVICE FOR MOTOR VEHICLE TANK

(30) Priorité: 03.07.1997 FR 9708417
(43) Date de publication de la demande: 19.04.2000
(73) Titulaire: MARWAL SYSTEMS, 51000 Chalons en Champagne (FR)
(72) Inventeur: TISTCHENKO, Michel, F-60280 Margny Les Compiegnes (FR)
(74) Mandataire: Texier, Christian
(86) Numéro de dépôt international: FR9801404
(87) Numéro de publication internationale: WO99001658

(56) Documents cités:
- DE-A- 4 402 224
- DE-A- 4 414 281
- DE-A- 4 433 301
- DE-A- 19 535 668
- GB-A- 2 304 821

## Description

La présente invention concerne le domaine des dispositifs de puisage de carburant pour réservoir de véhicule automobile.

On a déjà proposé de nombreux types de dispositifs à cet effet.

La présente invention a maintenant pour but de proposer un nouveau dispositif de puisage de carburant présentant des propriétés supérieures à celles des dispositifs connus.

Ce but est atteint selon la présente invention grâce à un dispositif de puisage de carburant pour réservoir de véhicule automobile tel que défini en revendication 1 annexée, laquelle est délimitée sous forme d'un préambule et d'une partie caractérisante, par rapport au document DE 19 535 668.

Cette disposition permet notamment de disposer d'un filtre de grande dimension offrant une grande longévité au dispositif.

D'autres caractéristiques, buts et avantages de la présente invention apparaîtront à la lecture de la description détaillée qui va suivre et en regard des dessins annexés, donnés à titre d'exemple non limitatif et sur lesquels:

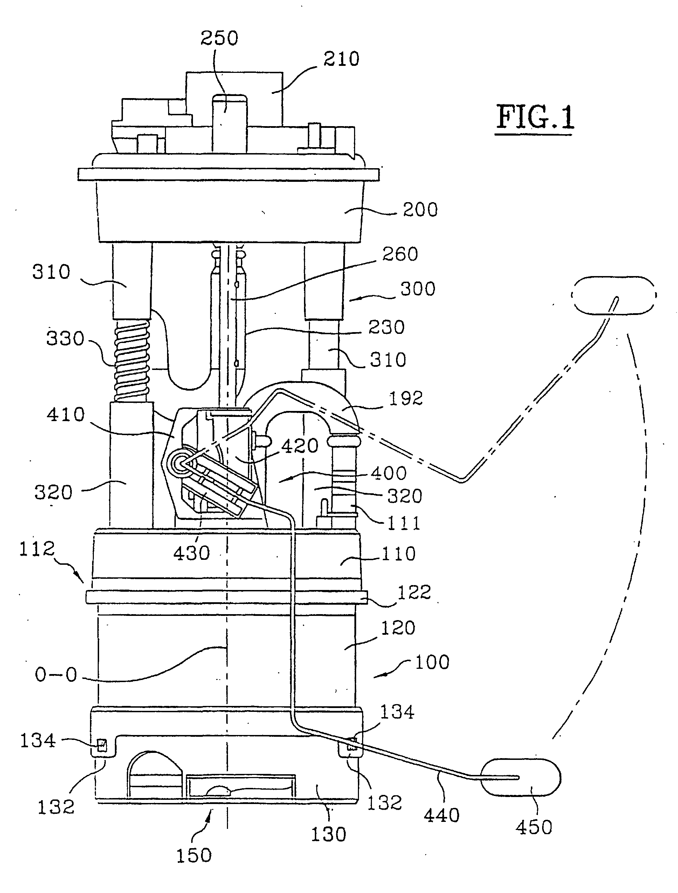

- la figure 1 annexée représente une vue latérale extérieure d'un dispositif conforme à la présente invention,

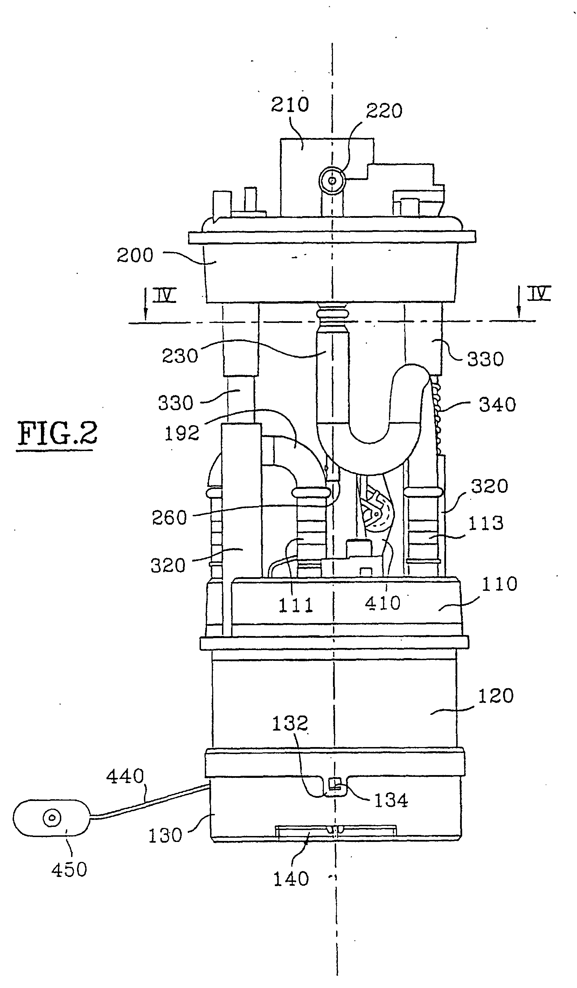

- la figure 2 représente une vue latérale extérieure opposée du même dispositif,

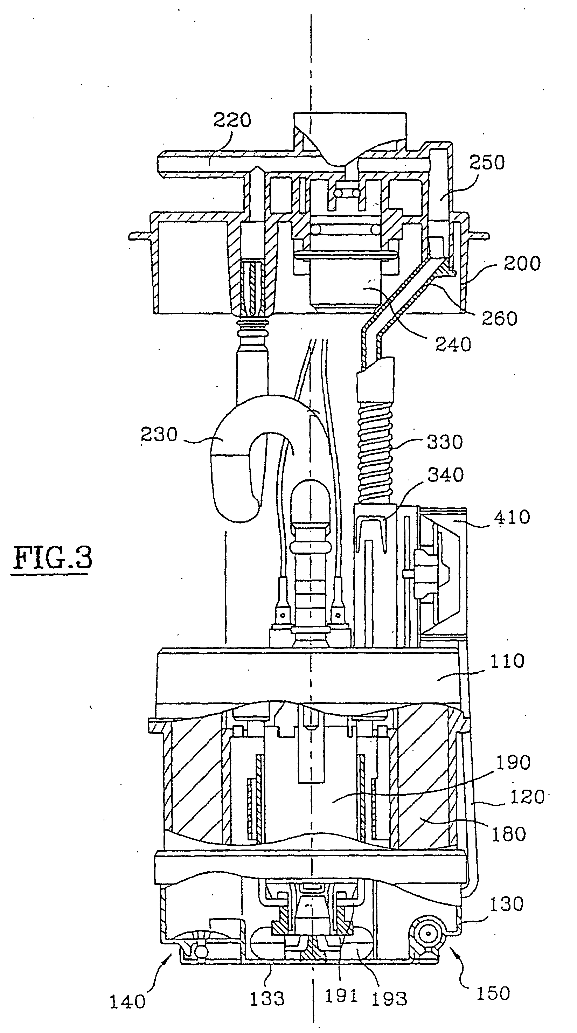

- la figure 3 représente une vue partielle en coupe verticale du même dispositif selon un plan de coupe orthogonal aux vues des figures 1 et 2,

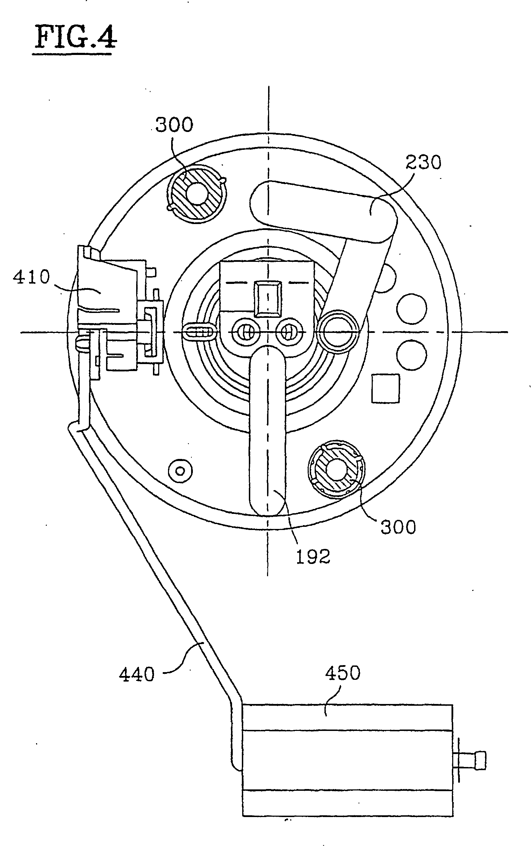

- La figure 4 représente une vue en coupe transversale de ce dispositif selon le plan de coupe référencé IV-IV sur la figure 2,
- la figure 5 représente une vue de dessus d'un couvercle de boîtier conforme à la présente invention,
- la figure 6 représente une vue en coupe verticale d'un boîtier conforme à la présente invention,
- la figure 7 représente une vue partielle en coupe verticale du boîtier conforme à la présente invention, illustrant une soudure de liaison entre le couvercle et le corps de boîtier,
- la figure 8 représente une autre vue partielle en coupe verticale du boîtier conforme à la présente invention, illustrant un contact de masse associé au filtre,

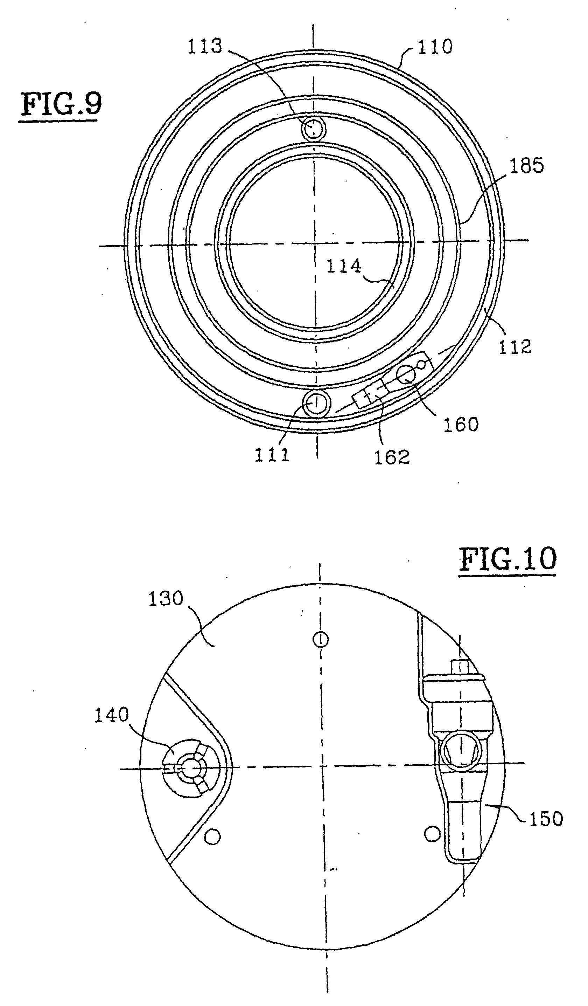

- la figure 9 illustre une vue de dessous du couvercle équipé de ce contact,
- la figure 10 illustre une vue de dessous du boîtier conforme à la présente invention,
- la figure 11 représente une vue en coupe verticale d'une pompe à jet équipant le boîtier conforme à la présente invention, et
- la figure 12 représente une vue schématique, partiellement en coupe verticale, d'une embase conforme à la présente invention.

L'ensemble de pompage conforme à la présente invention, illustré sur les figures annexées, comprend un boîtier 100 relié à une embase 200 par des colonnes 300.

Le boîtier 100 loge essentiellement une pompe électrique 190 et un filtre 180.

L'embase 200 est destinée à être fixée sur une paroi du réservoir de carburant, préférentiellement sur la paroi supérieure de celui-ci.

L'embase 200 supporte un connecteur électrique 210 assurant l'alimentation de la pompe électrique 190 (masse et borne positive d'alimentation) et la liaison des bornes de sortie d'un dispositif de jaugeage 400 avec un circuit de traitement externe (non représenté sur les figures).

L'embase 200 porte de plus une tubulure rigide 220, venue de moulage, reliée à la sortie de la pompe 190 via le filtre 180 et destinée à recevoir un conduit relié au site d'utilisation du carburant (injecteurs).

La tubulure 220 est reliée à la sortie de la pompe 190 via le filtre 180 par un conduit souple 230.

Par ailleurs l'embase 220 porte un régulateur détendeur 240. La fonction de ce régulateur détendeur 240 est de maintenir constante la pression de carburant dans le conduit relié à la tubulure 220. Pour cela le régulateur détendeur 240 possède une entrée reliée à la tubulure 220 et une sortie qui communique avec un réseau de passages 250 formés dans l'embase 200. Ce réseau de passages est lui même relié à un conduit 260 dont l'extrémité inférieure débouche au dessus du boîtier 100 de sorte que le surplus de carburant issu du régulateur 240 via le conduit 260 soit récupéré par le boîtier 100.

Le régulateur détendeur 240 peut faire l'objet de nombreux modes de réalisation connus en soi. Il ne sera donc pas décrit dans le détail par la suite. Pour l'essentiel, le régulateur 240 possède un clapet intercalé entre son entrée et sa sortie et piloté par une membrane soumise à la pression régnant dans la tubulure 220. Lorsque la pression dans la tubulure 220 dépasse un seuil donné, la membrane précitée ouvre le clapet associé et le carburant en excès s'écoule vers la sortie du régulateur et de là vers le boîtier 100 via le conduit 260. Lorsque la pression dans la tubulure 220 est inférieure au seuil précité, le clapet reste fermé, interdisant tout écoulement de carburant entre l'entrée et la sortie du régulateur 240.

La structure générale de l'embase 200 est classique en elle même et ne sera donc pas décrite plus en détail par la suite.

Il est prévu de préférence deux colonnes 300 assurant la liaison entre l'embase 200 et le boîtier 100. Ces colonnes 300 sont verticales et diamétralement opposées par rapport à l'axe vertical central O-O du boîtier 100.

Les colonnes 300 ont pour fonction de permettre un débattement vertical entre l'embase 200 et le boîtier 100, de sorte que le boîtier 100 repose en permanence sur le fond du réservoir, quelque soient les déformations de la paroi inférieure de celui-ci.

Pour celà selon le mode de réalisation illustré sur les figures annexées, chaque colonne 300 est formé d'un pilier 310 vertical venu de moulage sur la surface inférieure de l'embase 200 et d'un fourreau complémentaire 320, recevant le pilier 310 respectivement associé, venu de moulage sur le boîtier 100, plus précisément sur la surface supérieure d'un couvercle 110 de celui-ci.

De plus de préférence, des ressorts 330 sont intecalés entre chaque pilier 310 et fourreau 320 associé, pour solliciter le boîtier 100 vers le fond du réservoir.

Des structures d'encliquetage 340 peuvent être prévues entre les piliers 310 et les fourreaux 320 pour limiter le débattement autorisé entre l'embase 200 et le boîtier 100 de sorte que ceux-ci forme un module unitaire.

Le boîtier 100 possède un corps 120 surmonté d'un couvercle 110 et qui est fixé sur un bol inférieur 130.

Le corps de boîtier 120 et le couvercle 110 définissent en combinaison une chambre annulaire qui reçoit le filtre 180.

Pour celà le corps 120 a la forme d'une cuvette annulaire ouverte vers le haut, tandis que le couvercle 110 a la forme d'une cuvette annulaire ouverte vers le bas.

Le corps 120 et le couvercle 110 possèdent chacun une colerette 122, 124; 112, 114 en saillie vers l'extérieur, au niveau de leur contour d'ouverture, tant au niveau de leur surface radialement externe, qu'au niveau de leur surface radialement interne.

Et ces collerettes 122 et 112, 124 et 114 sont reliées entre elles deux à deux pour assurer l'étanchéité de la chambre interne définie par le corps 120 et le couvercle 110.

De préférence la liaison entre le couvercle 110 et le corps 120 est assurée par soudure par vibrations, le couvercle 110 et le corps 120 étant réalisés par moulage en matière plastique (comme d'ailleurs l'embase 200 et le bol 130).

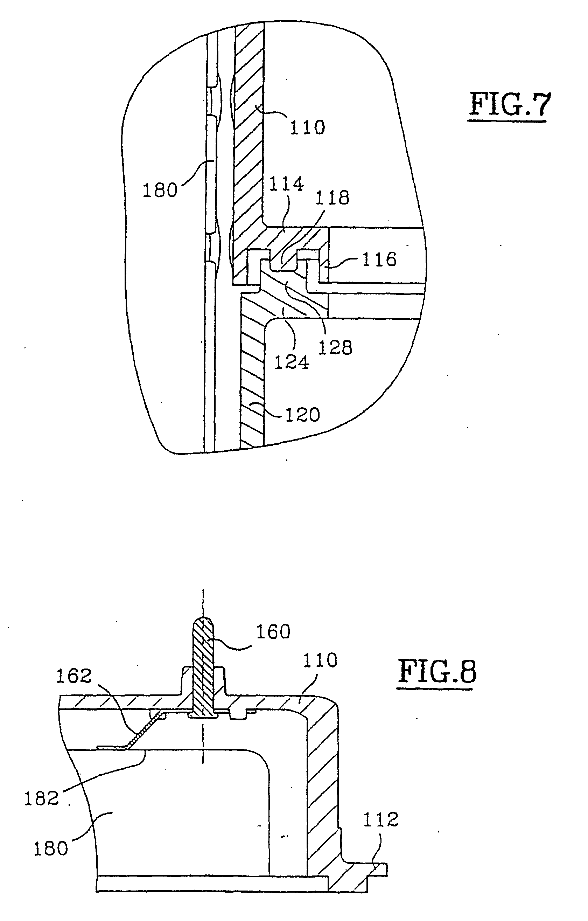

Plus précisément encore pour assurer cette soudure par vibrations, entre le corps 120 et le couvercle 110 de préférence, comme illustré sur la figure 7, l'un de ceux ci est muni d'une gorge annulaire 116 pourvue d'une nervure annulaire 118 en son centre, tandis que l'autre élément est muni d'une nervure annulaire 128 complémentaire de la nervure 118. Ainsi la liaison par soudure par vibrations est opérée entre les sommets des nervures 118 et 128.

Une telle liaison par soudure entre le couvercle 110 et le corps 120 permet d'obtenir une étanchéité parfaite entre ces éléments sans nécessité de pièce supplémentaire, notamment de joint d'étanchéité.

Par ailleurs, de préférence, la zone de soudure précitée est située sensiblement à mi-hauteur du boîtier formé par le couvercle 110 et le corps 120. Les inventeurs ont constaté que cette disposition correspondait à la meilleure tenue de la soudure sous les contraintes exercées.

Selon le mode de réalisation de la figure 7, la gorge 116 est prévue sur le couvercle 110 tandis que la nervure 128 est prévue sur le corps 120. Cependant la disposition inverse peut être retenue.

Le filtre 180 a une forme annulaire. Il est placé dans la chambre définie par le corps 120 et le couvercle 110.

Plus précisément encore le filtre 180 comporte un corps filtrant 182 à circulation radiale, placé entre un flasque supérieur 184 et un flasque inférieur 186.

L'étanchéité entre le flasque supérieur 184 et la surface interne de la face supérieure du couvercle 110 est assurée par un joint annulaire 185, par exemple un joint annulaire à deux lèvres.

L'étanchéité entre le flasque inférieur 186 et la base du corps 120 est assurée par un joint annulaire 187, par exemple un joint torique.

L'entrée du filtre 180 est définie par la surface radialement externe de celui-ci, qui communique avec une chambre 181 formée entre cette surface radialement externe du filtre et l'ensemble corps 120/couvercle 110.

La sortie du filtre 180 est définie par la surface radialement interne de celui-ci, qui communique avec une chambre 188 formée entre cette surface radialement interne du filtre 180 et l'ensemble corps 120/couvercle 110.

La chambre d'entrée 181 est reliée à la sortie de la pompe 190 par une conduite souple 192. Plus précisément cette conduite souple 192 est engagée sur une tubulure rigide 111 venue de moulage sur la surface supérieure du couvercle 110 et qui communique elle même avec la chambre 181.

La chambre de sortie 188 est reliée à la conduite 230 précitée.

Plus précisément pour celà la conduite 230 est engagée sur une tubulure rigide 113 venue de moulage sur la surface supérieure du couvercle 110 et qui communique elle même avec la chambre 188.

Les tubulures 111 et 113 débouchent dans la chambre formée par le corps 120 et le couvercle 110 respectivement de part et d'autre du joint 185.

Ainsi le carburant issu de la pompe gagne la chambre 181 par le conduit 192, traverse radialement vers l'intérieur le filtre 180, atteint la chambre 188 et de là gagne la tubulure de sortie 220 par l'intermédiaire du conduit 230.

On notera que ainsi, dans le cadre de la présente invention, le filtre 180 de géométrie annulaire, est disposé dans une chambre radialement externe du boîtier 100 ce qui permet notamment de disposer d'un filtre 180 de grande dimension offrant une grande longévité au dispositif.

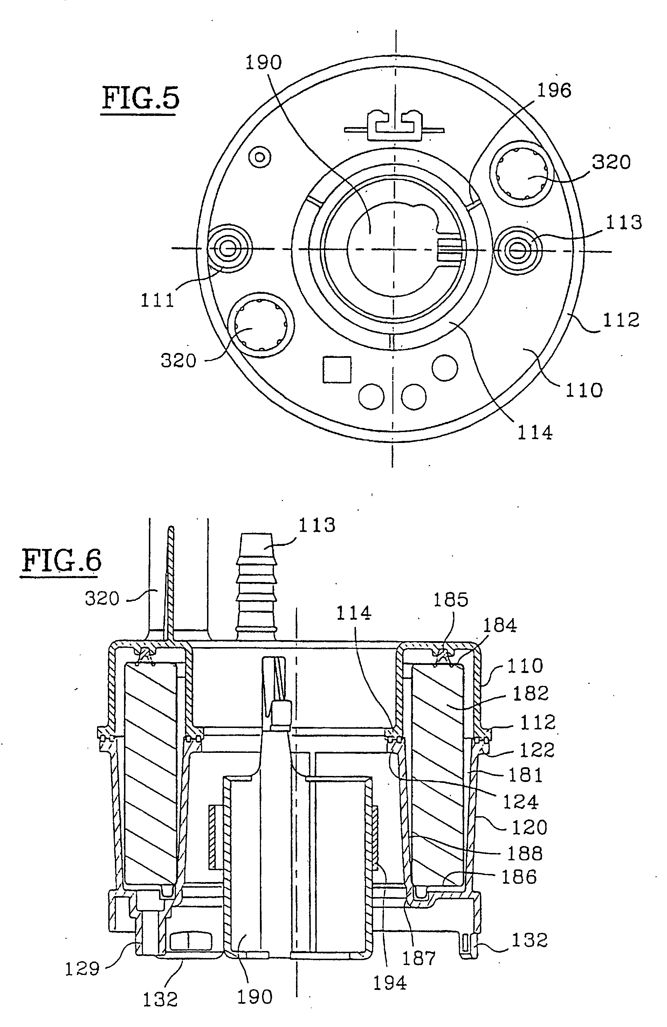

La pompe 190 est placée dans l'espace central défini par l'ensemble corps 120/couvercle 110. La pompe 190 est ainsi de préférence supportée élastiquement par le corps 120. Pour celà la pompe 190 est avantageusement placée dans une cage annulaire 194 reliée à la paroi radialement interne du corps par des moyens amortisseurs 196. Ceux-ci ont été schématisés sur la figure 5. Ils peuvent faire l'objet de nombreux modes de réalisation.

Le bol 130 fixé sur la base du corps 120 est destiné à constituer une réserve positive de carburant pour la pompe 190.

L'entrée 191 de la pompe 190 plonge par conséquent dans ce bol 130. L'entrée 191 de la pompe 190 est équipée de façon connue en soi d'une crépine de filtrage 193.

Le bol 130 est fixé sur la base du corps 120 par tous moyens appropriés, tels que par exemple par des pattes d'encliquetage 132 venues de moulage sur la base du corps 120 et venant en prise avec des dentures complémentaires 134 solidaires du bol 130.

Le bol 130 peut être munie dans sa paroi de fond 133 d'un clapet 140 classique en soi conçu pour assurer un remplissage du bol 130 quand le niveau de carburant dans le réservoir est supérieur au niveau de carburant dans le bol 130, mais interdire une vidange du bol 130 dans le cas inverse.

Un tel clapet 140 peut faire l'objet de nombreux modes de réalisation connus en eux-mêmes et ne sera donc pas décrit dans le détail par la suite.

On notera cependant que de préférence, le clapet 140 a la forme générale d'un champignon, dont la tête horizontale repose sur la surface supérieure de la paroi de base du bol 130 et dont le pied est engagé dans un passage traversant cette paroi, pour autoriser un débattemen vertical de ce clapet 140.

De plus dans le cadre de la présente invention, il est de préférence prévu des moyens additionnels pour assurer le remplissage du bol 130. Ces moyens sont de préférence formés d'une pompe à jet 150 pilotée par la haute pression régnant dans la chambre d'entrée 181 du filtre 180.

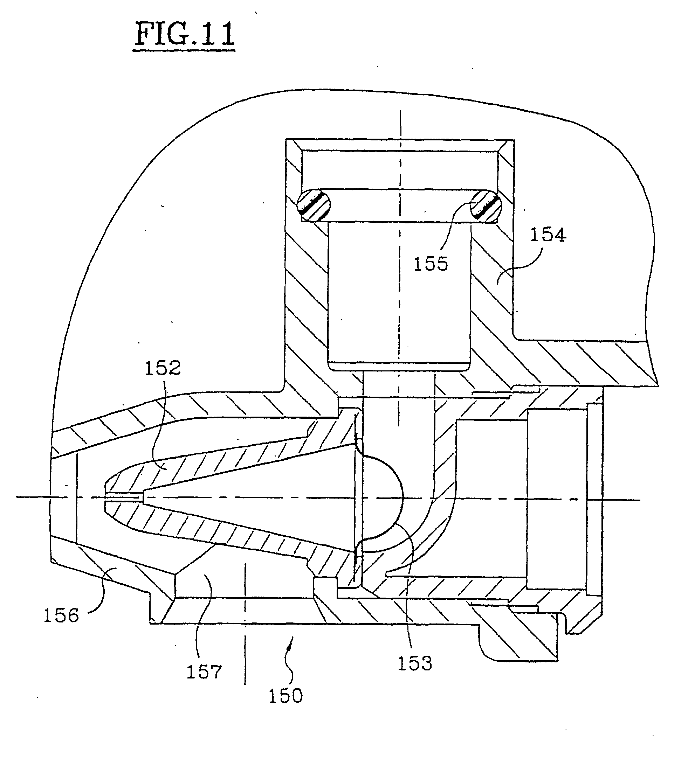

On a illustré sur la figure 11 un mode de réalisation préférentiel, mais non limitatif, d'une telle pompe à jet 150.

On aperçoit sur la figure 11 une buse horizontale 152 équipée d'un filtre d'entrée 153, qui communique par un conduit vertical 154 équipé d'un joint annulaire 155, avec une tubulure 129 venue de moulage sur la paroi inférieure du corps 120 et reliée à la chambre 181.

L'homme de l'art comprendra que la disposition du filtre 180 dans la chambre externe du boîtier 100 facilite l'alimentation directe de la pompe à jet 150 par la tubulure 129 venue de moulage sur le corps 120.

La buse 152 débouche en regard d'un col de Venturi 156 dont l'entrée communique par un passage 157 avec le volume du réservoir. Ainsi la dépression créée dans le col 156 par le flux de carburant issu de la buse 152 et provenant de la chambre haute pression 181, aspire du carburant par le passage 157 pour le diriger vers le bol 130.

Pour éviter une vidange du bol 130 par le passage 157, au repos, le col 156 communique de préférence avec un conduit vertical qui débouche dans le bol 130 à un niveau égal à la hauteur de ce bol 130.

Il est à noter que, alors que dans de nombreux systèmes connus, lors d'un fonctionnement à sec de la pompe, celle-ci opère une mise en pression, et de là un échauffement du circuit de sortie, en raison de la fermeture du régulateur de pression lié à ce circuit de sortie, la présence du gicleur 152 relié directement à la chambre d'entrée 181 du filtre, c'est-à-dire à la sortie de la pompe 190 permet dans le cadre de la présente invention, une ventilation du circuit de sortie de la pompe, par ce gicleur 152, en cas de fonctionnement à sec, et de là permet d'éviter une pressurisation de ce circuit de sortie et par conséquent d'éviter un échauffement intempestif de la pompe.

Selon une autre caractéristique avantageuse de la présente invention, il est prévu des moyens assurant une mise à la masse des flasques 184, 186 métalliques du filtre 180.

Selon le mode de réalisation illustré sur les figures annexées, ces moyens de mise à la masse sont formés, d'un plot 160 électriquement conducteur qui traverse de façon étanche la paroi supérieure du couvercle et qui est relié électriquement avec une lamelle élastique 162, également électriquement conductrice, clipsée sur des pions venus de moulage sur la face interne du couvercle, et reposant élastiquement sur le flasque supérieur 184.

Le plot 160 est lui même relié par une fiche et un fil non représentés sur les figures annexées, à une borne de masse disponible au niveau du connecteur 210.

Le détecteur de niveau 400 comprend essentiellement un boîtier 410 porté par la paroi supérieure du couvercle 110, et qui loge une plaquette 420 munie d'une piste résistive sur laquelle se déplace un curseur 430 actionné par un bras 440 lié à un flotteur 450.

Bien entendu la présente invention n'est pas limitée au mode de réalisation qui vient d'être décrit, mais s'étend à toutes variantes conformes à son esprit.

Le cas échéant une étanchéité peut être formée entre le bord supérieur du bol 130 et le bord inférieur du boîtier 100, plus précisément du corps 120, afin de bénéficier d'une réserve dynamique enroulage véhicule constitué de l'ensemble du volume formé par le bol 130 et le volume central du boîtier 100.

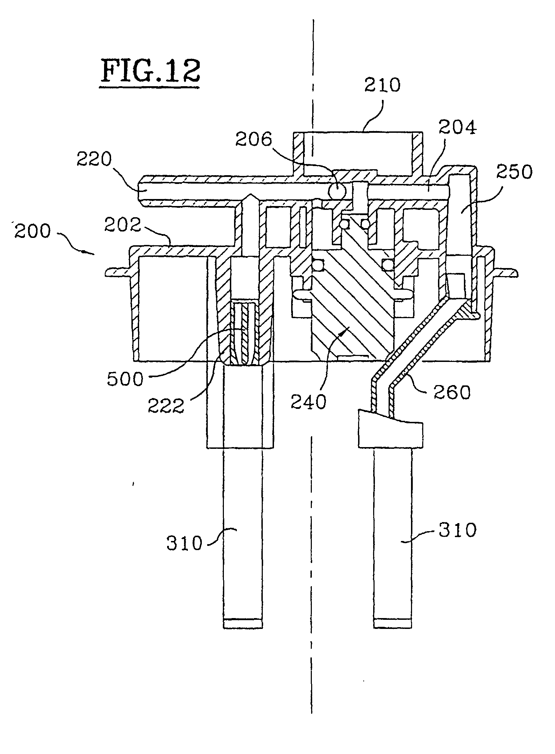

Par ailleurs, on aperçoit sur la figure 12 annexée, un clapet anti-retour 500 placé sur une tubulure 222 venue de moulage sur la surface inférieure de l'embase 200. Cette tubulure 222 reçoit l'extrémité supérieure du conduit 230 venant de la sortie du filtre. De plus, la tubulure 222 est reliée à la tubulure de sortie 220 de l'embase et à l'entrée du régulateur 240.

La disposition du clapet anti-retour 500 dans la tubulure 222 formé sur l'embase permet d'améliorer l'étanchéité du système par rapport aux dispositions classiques consistant à incorporer le clapet anti-retour dans le boîtier de pompe. On notera par ailleurs sur la figure 12 que la tubulure de sortie 220 s'étend parallèlement à la paroi supérieure 202 de l'embase 200 et coaxialement avec un conduit secondaire 204 de plus faible section reliant la sortie du régulateur 240 et le conduit 250 assurant le retour de surplus de carburant vers le bol de réserve. Cette disposition coaxiale des conduits 204et 220 facilite la réalisation de l'embase incorporant les produits précités, par moulage en une seule pièce.

Cependant, une étanchéité doit bien entendu être assurée entre les conduits 204 et 220.

Selon le mode de réalisation illustré sur la figure 12, cette étanchéité est assurée par une bille 206 placée dans une cloison assurant la délimitation entre les conduits 204 et 220.

## Revendications

1. Dispositif de puisage de carburant pour réservoir de véhicule automobile, du type comportant un boîtier (100) qui porte une pompe de puisage (190) et un filtre (180) disposé sur le conduit de sortie de la pompe (190), le filtre (180) étant de géométrie annulaire et disposé dans une chambre radialement externe du boîtier (100), la pompe étant disposée dans l'espace central du filtre (180), et le dispositif possède une pompe à jet (150) adaptée pour remplir un bol de réserve (130) associé à la pompe (190), **caractérisé par le fait que** la pompe (190) est associée à un amortisseur de vibration (196) disposé dans l'espace central du filtre (180) et que le boîtier (100) possède une tubulure (129) venue de moulage sur la paroi inférieure du boîtier et qui relie la chambre d'entrée du filtre (180) et le gicleur (152) de la pompe à jet (150).

2. Dispositif selon la revendication 1, **caractérisé par le fait que** le boîtier (100) logeant le filtre (180) est formé d'un corps (120) surmonté d'un couvercle (110).

3. Dispositif selon la revendication 2, **caractérisé par le fait que** le bol de réserve (130) est fixé sur la base du corps (120).

4. Dispositif selon l'une des revendications 2 ou 3, **caractérisé par le fait que** le corps (120) et le couvercle (110) possèdent chacun une collerette (122, 124; 112, 114) en saillie vers l'extérieur, au niveau de leur contour d'ouverture, tant au niveau de leur surface radialement externe, qu'au niveau de leur surface radialement interne, reliées entre elles deux à deux pour assurer l'étanchéité de la chambre interne définie par le corps (120) et le couvercle (110).

5. Dispositif selon l'une des revendications 2 à 4, **caractérisé par le fait que** la liaison entre le couvercle (110) et le corps (120) est assurée par soudure par vibrations.

6. Dispositif selon la revendication 5, **caractérisé par le fait que** l'un du couvercle (110) et du corps (120) est muni d'une gorge annulaire (116) pourvue d'une nervure annulaire (118) en son centre, tandis que l'autre du corps (120) et du couvercle (110) est muni d'une nervure annulaire (128) complémentaire de la première nervure (118), une liaison par soudure par vibrations étant opérée entre les sommets des nervures (118, 128).

7. Dispositif selon l'une des revendications 1 à 6, **caractérisé par le fait que** le filtre (180) comporte un corps filtrant (182) à circulation radiale, placé entre un flasque supérieur (184) et un flasque inférieur (186).

8. Dispositif selon l'une des revendications 1 à 7, **caractérisé par le fait qu'**il comprend des moyens (160, 162) assurant une mise à la masse des flasques (184, 186) métalliques du filtre (180).

9. Dispositif selon la revendication 8, **caractérisé par le fait que** les moyens de mise à la masse sont formés, d'un plot (160) électriquement conducteur qui traverse de façon étanche la paroi supérieure du boîtier (100) et qui est relié électriquement avec une lamelle élastique (162), également électriquement conductrice, qui repose élastiquement sur un flasque (184) du boîtier.

10. Dispositif selon l'une des revendications 2 à 6, **caractérisé par le fait que** la zone de liaison entre le couvercle (110) et le corps (120) est située sensiblement à mi-hauteur du boîtier (100).

11. Dispositif selon la revendication 3, **caractérisé par le fait qu'**une étanchéité est assurée entre le bol de réserve (130) et le boîtier (100).

12. Dispositif selon l'une des revendications 1 à 11, **caractérisé par le fait qu'**un clapet anti-retour (500) est placé sur une tubulure d'entrée (222) incorporée à l'embase (200) du dispositif destinée à être fixée sur une paroi du réservoir.

13. Dispositif selon l'une des revendications 1 à 12, **caractérisé par le fait que** l'embase (200) destinée à être fixée sur une paroi du réservoir comprend deux conduits (220, 204) coaxiaux venus de moulage et une bille (206) chassée dans une paroi assurant la délimitation entre ces deux conduits, pour assurer l'étanchéité entre ceux-ci.

14. Dispositif selon la revendication 13, **caractérisé par le fait que** les deux conduits coaxiaux assurent respectivement, l'un (204) une liaison entre la sortie d'un régulateur (240) et un conduit (250) de retour vers le bol de réserve, l'autre (220), une sortie vers le site d'utilisation de carburant.

15. Réservoir de carburant pour véhicule automobile **caractérisé par le fait qu'**il comprend un dispositif de puisage conforme à l'une des revendications 1 à 14.

## Patentansprüche

1. Kraftstoff-Fördervorrichtung für einen Kraftfahrzeug-Vorratsbehälter, die der Art nach ein Gehäuse (100) aufweist, das eine Förderpumpe (190) und ein Filter (180) trägt, das auf der Ausgangsleitung der Pumpe (190) angeordnet ist, wobei das Filter (180) kreisringförmige Geometrie aufweist und in einer radial äußeren Kammer des Gehäuses (100) angeordnet ist, die Pumpe im zentralen Raum des Filters (180) angeordnet ist, und eine Strahlpumpe (150) vorgesehen ist, die dazu eingerichtet ist, ein Vorratsgefäß (130) zu füllen, das der Pumpe (190) zugeordnet ist, **dadurch gekennzeichnet, daß** die Pumpe (190) einem Schwingungsdämpfer (196) zugeordnet ist, der im zentralen Raum des Filters (180) angeordnet ist, und daß das Gehäuse (100) eine Rohrleitung (129) besitzt, die dem Abformen auf der unteren Wand des Gehäuses entstammt und die die Einlaßkammer des Filters (180) und die Düse (152) der Strahlpumpe (150) verbindet.

2. Vorrichtung nach Anspruch 1, **dadurch gekennzeichnet, daß** das Gehäuse (100), das das Filter (180) aufnimmt, aus einem Körper (120) gebildet ist, über dem ein Deckel (110) angebracht ist.

3. Vorrichtung nach Anspruch 2, **dadurch gekennzeichnet, daß** das Vorratsgefäß (130) auf der Unterseite des Körpers (120) befestigt ist.

4. Vorrichtung nach einem der Ansprüche 2 oder 3, **dadurch gekennzeichnet, daß** der Körper (120) und der Deckel (110) jeweils einen Flansch (122, 124; 112, 114) besitzt, der auf der Höhe ihrer Öffnungskontur nach außen vorspringt, ebenso auf der Höhe ihrer radial äußeren Oberfläche wie auf Höhe ihrer radial inneren Oberfläche, die paarweise miteinander verbunden sind, um die Abdichtung der inneren Kammer sicherzustellen, die durch den Körper (120) und den Deckel (110) definiert ist.

5. Vorrichtung nach einem der Ansprüche 2 bis 4, **dadurch gekennzeichnet, daß** die Verbindung zwischen dem Deckel (110) und dem Körper (120) durch Vibrationsschweißung sichergestellt ist.

6. Vorrichtung nach Anspruch 5, **dadurch gekennzeichnet, daß** der eine von Deckel (110) und Körper (120) mit einer kreisringförmigen Nut (116) versehen ist, die in ihrer Mitte mit einer kreisringförmigen Rippe (118) ausgestattet ist, während der andere von Körper (120) und Deckel (110) mit einer kreisringförmigen Rippe (128) versehen ist, die zur ersten Rippe (118) komplementär ist, wobei eine Verbindung durch Vibrationsschweißung zwischen den Scheiteln der Rippen (118, 128) vorgenommen ist.

7. Vorrichtung nach einem der Ansprüche 1 bis 6, **dadurch gekennzeichnet, daß** das Filter (180) einen filtrierenden Körper (182) mit radialem Umlauf aufweist, der zwischen einem oberen Schild (184) und einem unteren Schild (186) angeordnet ist.

8. Vorrichtung nach einem der Ansprüche 1 bis 7, **dadurch gekennzeichnet, daß** sie Mittel (160, 162) aufweist, die den Masseschluß der Metallschilde (184, 186) des Filters (180) sicherstellen.

9. Vorrichtung nach Anspruch 8, **dadurch gekennzeichnet, daß** die Mittel zum Masseschluß aus einem elektrisch leitfähigen Stift (160) gebildet sind, der die obere Wand des Gehäuses (100) dicht durchsetzt und der elektrisch mit einer elastischen Lamelle (162) verbunden ist, die ebenfalls elektrisch leitfähig ist und elastisch auf einem Schild (184) des Gehäuses ruht.

10. Vorrichtung nach einem der Ansprüche 2 bis 6, **dadurch gekennzeichnet, daß** die Verbindungszone zwischen dem Deckel (110) und dem Körper (120) im wesentlichen in mittlerer Höhe des Gehäuses (100) gelegen ist.

11. Vorrichtung nach Anspruch 3, **dadurch gekennzeichnet, daß** eine Abdichtung zwischen dem Vorratsgefäß (130) und dem Gehäuse (100) sichergestellt ist.

12. Vorrichtung nach einem der Ansprüche 1 bis 11, **dadurch gekennzeichnet, daß** ein Rückschlagventil (500) auf einer Einlaß-Rohrleitung (222) angeordnet ist, die in den Sockel (200) der Vorrichtung einbezogen ist, der dazu bestimmt ist, auf einer Wand des Vorratsbehälters befestigt zu werden.

13. Vorrichtung nach einem der Ansprüche 1 bis 12, **dadurch gekennzeichnet, daß** der Sockel (200), der dazu bestimmt ist, auf einer Wand des Vorratsbehälters befestigt zu werden, zwei koaxiale Leitungen (220, 204) aufweist, die dem Abformen entstammen, sowie eine Kugel (206), die in eine Wand getrieben ist und die Abgrenzung zwischen den beiden Leitungen sicherstellt, um die Abdichtung zwischen diesen sicherzustellen.

14. Vorrichtung nach Anspruch 13, **dadurch gekennzeichnet, daß** von den beiden koaxialen Leitungen die eine (204) eine Verbindung zwischen dem Auslaß eines Reglers und einer Rückführleitung (250) zum Vorratsgefäß bzw. die andere (220) einen Auslaß zur Gebrauchsstelle des Brennstoffs sicherstellt.

15. Brennstoff-Vorratsbehälter für ein Kraftfahrzeug, **dadurch gekennzeichnet, daß** er eine Fördervorrichtung nach einem der Ansprüche 1 bis 14 aufweist.

## Claims

1. Fuel-drawing device for a motor vehicle tank, of the type comprising a housing (100) which bears a withdrawing pump (190) and a filter (180) arranged on the outlet pipe of the pump (190), the filter (180) having an annular shape and being arranged in a chamber radially external to the housing (100), the pump being arranged in the central space of the filter (180), and the device has a jet pump (150) designed to fill a reserve bowl (130) associated with the pump (190), **characterized in that** the pump (190) is associated with a vibration damper (196) arranged in the central space of the filter (180) and **in that** the housing (100) has a nozzle (129) moulded integrally on the lower wall of the housing and which connects the inlet chamber of the filter (180) and the jet nozzle (152) of the jet pump (150).

2. Device according to Claim 1, **characterized in that** the housing (100) housing the filter (180) is formed of a body (120) surmounted by a cover (110).

3. Device according to Claim 2, **characterized in that** the reserve bowl (130) is fixed to the base of the body (120).

4. Device according to either of Claims 2 and 3, **characterized in that** the body (120) and the cover (110) each have an outwardly projecting flange (122, 124; 112, 114) running around their opening, either on their radially external surface or on their radially internal surface, these flanges being connected together in pairs to seal the internal chamber defined by the body (120) and the cover (110).

5. Device according to one of Claims 2 to 4, **characterized in that** the cover (110) and the body (120) are connected together by vibration welding.

6. Device according to Claim 5, **characterized in that** one of the cover (110) and the body (120) is equipped with an annular groove (116) with an annular rib (118) at its centre, while the other of the body (120) and the cover (110) is equipped with an annular rib (128) which complements the first rib (118), the tops of the ribs (118, 128) being connected by vibration welding.

7. Device according to one of Claims 1 to 6, **characterized in that** the filter (180) comprises a radial-flow filter element (182) placed between an upper end plate (184) and a lower end plate (186).

8. Device according to one of Claims 1 to 7, **characterized in that** it comprises means (160, 162) for grounding the metallic end plates (184, 186) of the filter (180).

9. Device according to Claim 8, **characterized in that** the grounding means are formed of an electrically conducting stud (160) which passes in leaktight fashion through the upper wall of the housing (100) and which is electrically connected to an elastic leaf (162), which is also electrically conducting, which rests elastically on an end plate (184) of the housing.

10. Device according to one of Claims 2 to 6, **characterized in that** the region of connection between the cover (110) and the body (120) is located approximately mid-way up the housing (100).

11. Device according to Claim 3, **characterized in that** sealing is achieved between the reserve bowl (130) and the housing (100).

12. Device according to one of Claims 1 to 11, **characterized in that** a nonreturn valve (500) is placed on an inlet nozzle (222) incorporated into the base (200) of the device that is intended to be fixed to a wall of the tank.

13. Device according to one of Claims 1 to 12, **characterized in that** the base (200) intended to be fixed to a wall of the tank comprises two integrally-moulded coaxial pipes (220, 204) and a ball (206) driven into one wall to provide the demarcation between these two pipes, so as to seal one of them from the other.

14. Device according to Claim 13, **characterized in that** one (204) of the two coaxial pipes provides a connection between the outlet of a regulator (240) and a pipe (250) returning to the reserve bowl, and the other (220) of the two coaxial pipes acts as an outlet to the site where the fuel will be used.

15. Motor vehicle fuel tank **characterized in that** it comprises a drawing device according to one of Claims 1 to 14.
